# EUROPEAN PATENT APPLICATION

(11) **EP 3 148 183 A1**
(43) Date of publication of application: **29.03.2017**
(21) Application number: 14892796.5
(22) Date of filing: 03.12.2014
(51) Int. Cl.: H04N 7/14

(54) **IMAGE PROCESSING METHOD AND DEVICE, AND COMPUTER STORAGE MEDIUM**

(30) Priority: 20.05.2014 CN 201410214433
(71) Applicant: Xi'an Zhongxing New Software Co. Ltd., Xian, Shaanxi 710114 (CN)
(72) Inventor: GUO, Chunyan, Xian Shaanxi 710114 (CN); WANG, Hong, Xian Shaanxi 710114 (CN)
(74) Representative: Studio Torta S.p.A.
(86) International application number: PCT/CN2014/092910
(87) International publication number: WO 2015/176521

(57) **Abstract**

The present invention provides an image processing method and device, and a computer storage medium. The image processing method comprises: locking an area to be shielded and acquiring an object characteristic value in the locked area; and when it is determined according to the object characteristic value that the location of the locked area is not changed, performing image processing on the locked area.

## Description

### TECHNICAL FIELD

The present disclosure generally relates to data processing technology of mobile communication field, and more particularly, to a method and device for processing an image, and a computer storage medium.

### BACKGROUND

Nowadays, making video calls via smart terminals has become a common way for users to communicate with each other, and functions of the video calls of the smart terminals are involved in both remote video conferences and telephone contact.

However, with the improvement of camera pixels, the functions of the video calls are increasingly powerful. Accordingly, some issues of privacy protection are aroused for the users. For example, when a user is making a video call, he/she may not want the opponent to see a certain object or area surrounding him/her, or some gestures or behaviors in a conference; or, he/she may not want the opponent to know the place where he/she is.

### SUMMARY

Embodiments of the present disclosure provide a method and device for processing an image, and a computer storage medium, which are capable of effectively protecting user privacy by performing suitable image processing on a selected region.

The technical solutions of the embodiments of the present disclosure are implemented as follows.

The embodiments of the present disclosure provide a method for processing an image, including:
selecting a region to be blocked on the image, and acquiring a feature value of an object in the selected region; and
performing image processing on the selected region when it is determined that a location of the selected region is not changed based on the feature value of the object.

In an embodiment, wherein the selecting a region to be blocked includes:
acquiring a touch operation of a user;
performing mode recognition and classification on the image to determine the feature value of the object touched by the user; and
selecting the region to be blocked corresponding to the feature value of the object touched by the user.

In an embodiment, the selecting a region to be blocked includes:
acquiring an operation for touching an interface from a user; and
selecting the region to be blocked corresponding to a closed circle generated when the user touches the interface;
   or,
acquiring a button operation of a user; and
selecting the region to be blocked corresponding to a line-connecting identifier formed by the button operation of the user.

In an embodiment, the performing image processing on the selected region includes:
acquiring outline and location information of the selected region;
performing adaptation processing on a preset picture according to the outline and location information; and
successively covering the selected region pixel-by-pixel using the picture obtained by the adaptation processing.

In an embodiment, the performing image processing on the selected region includes:
acquiring outline and location information of the selected region;
performing edge detection processing on the selected region according to the outline and location information, to extract color values of edge points;
averaging the extracted color values of the edge points to obtain an average color value of the edge points; and
performing color filling in the selected region based on the average color value of the edge points.

In an embodiment, the method further includes:
when it is determined that the location of the selected region is changed based on the feature value of the object, performing mode recognition and classification on the image based on the feature value of the object to locate the region to be blocked with the changed location.

In an embodiment, the method further includes:
before the selecting a region to be blocked, presetting a manner for selecting the region to be blocked and/or a manner for performing image processing on the selected region.

The embodiments of the present disclosure further provide a device for processing an image, including a first region selecting module, a location monitoring module and an image processing module,
the first region selecting module is configured to select a region to be blocked, and acquire a feature value of an object in the selected region;
the location monitoring module is configured to determine whether a location of the selected region is changed based on the feature value of the object to obtain a determination result; and
the image processing module is configured to, when the determination result obtained by the location monitoring module indicates that the location of the selected region is not changed, perform image processing on the selected region.

In an embodiment, the first region selecting module includes a first acquiring unit, a determination unit and a first selecting unit,
the first acquiring unit is configured to acquire a touch operation of a user;
the determination unit is configured to perform mode recognition and classification on the image to determine the feature value of the object touched by the user; and
the first selecting unit is configured to select the region to be blocked corresponding to the feature value of the object touched by the user.

In an embodiment, the first region selecting module includes a second acquiring unit and a second selecting unit;
the second acquiring unit is configured to acquire an operation for touching an interface from a user; and
the second selecting unit is configured to select the region to be blocked corresponding to a closed circle generated when the user touches the interface; or,
the second acquiring unit is configured to acquire a button operation of a user; and
the second selecting unit is configured to select the region to be blocked corresponding to a line-connecting identifier formed by the button operation of the user.

In an embodiment, the image processing module includes a third acquiring unit, an adaptation processing unit and a covering unit,
the third acquiring unit is configured to acquire outline and location information of the selected region;
the adaptation processing unit is configured to perform adaptation processing on a preset picture according to the outline and location information; and the covering unit is configured to successively cover the selected region pixel-by-pixel using the picture obtained by the adaptation processing.

In an embodiment, the image processing module includes a fourth acquiring unit, an extraction unit, an averaging unit and a filling unit,
the fourth acquiring unit is configured to acquire outline and location information of the selected region;
the extraction unit is configured to perform edge detection processing on the selected region according to the outline and location information, to extract color values of edge points;
the averaging unit is configured to average the extracted color values of the edge points to obtain an average color value of the edge points; and the filling unit is configured to perform color filling in the selected region based on the average color value of the edge points.

In an embodiment, the device further includes a second region selecting module, the second region selecting module is configured to, when the determination result obtained by the location monitoring module indicates that the location of the selected region is changed, perform mode recognition and classification on the image based on the feature value of the object to locate the region to be blocked with the changed location.

In an embodiment, the device further includes a setting module,
the setting module is configured to, before the region to be blocked is selected by the first region selecting module, preset a manner for selecting the region to be blocked and/or a manner for performing image processing on the selected region.

The embodiments of the present disclosure further provide a computer storage medium stored with computer executable instructions for performing the method for processing an image according to the embodiments of the present disclosure.

In the method and device for processing an image, and a computer storage medium provided by the embodiments of the present disclosure, a region to be blocked is selected, and a feature value of an object in the selected region is acquired; image processing is performed on the selected region when it is determined that a location of the selected region is not changed based on the feature value of the object. In this way, user privacy can be effectively protected by performing suitable image processing on the selected region.

### BRIEF DESCRIPTION OF THE DRAWINGS

Fig. 1 is a flow chart illustrating a method for processing an image according to an embodiment of the present disclosure;
Fig. 2 is a flow chart illustrating selection of a region to be blocked through an automatic selecting manner in a method for processing an image according to an embodiment of the present disclosure;
Fig. 3 is a flow chart illustrating selection of a region to be blocked through a manual selecting manner in a method for processing an image according to an embodiment of the present disclosure;
Fig. 4 is a flow chart illustrating selection of a region to be blocked through a manual selecting manner in a method for processing an image according to another embodiment of the present disclosure;
Fig. 5 is a flow chart illustrating coverage of the selected region using a preset picture in a method for processing an image according to an embodiment of the present disclosure;
Fig. 6 is a flow chart illustrating the performing of color filling in the selected region based on an average color value of edge points in a method for processing an image according to an embodiment of the present disclosure;
Fig. 7 is a flow chart illustrating a method for processing an image according to another embodiment of the present disclosure;
Fig. 8 is a flow chart illustrating a method for processing an image according to yet another embodiment of the present disclosure;
Fig. 9 is a block diagram illustrating a device for processing an image according to an embodiment of the present disclosure;
Fig. 10 is a block diagram illustrating a first region selecting module in a device for processing an image according to an embodiment of the present disclosure;
Fig. 11 is a block diagram illustrating a first region selecting module in a device for processing an image according to another embodiment of the present disclosure;
Fig. 12 is a block diagram illustrating an image processing module in a device for processing an image according to an embodiment of the present disclosure;
Fig. 13 is a block diagram illustrating an image processing module in a device for processing an image according to another embodiment of the present disclosure;
Fig. 14 is a block diagram illustrating a device for processing an image according to another embodiment of the present disclosure; and
Fig. 15 is a block diagram illustrating a device for processing an image according to yet another embodiment of the present disclosure.

### DETAILED DESCRIPTION

Hereinafter, the present disclosure is further explained in detail with reference to the accompanying drawings and detailed embodiments.

In embodiments of the present disclosure, a region to be blocked is selected and a feature value of an object in the selected region is acquired; image processing is performed on the selected region when it is determined that a location of the selected region is not changed based on the feature value of the object.

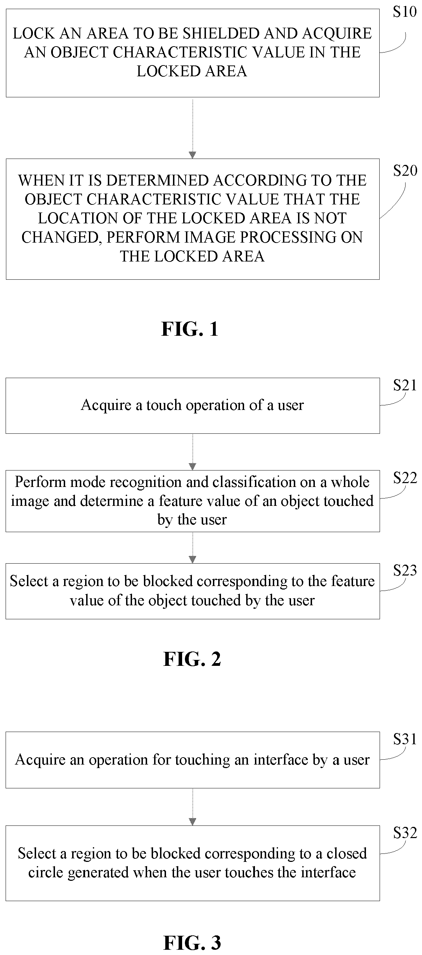

In an application example of a video call, before implementing the above-described method for processing an image according to an embodiment of the present disclosure, a blocking function of a terminal, which is processing a video call service, needs to be firstly turned on. Fig. 1 is a flow chart illustrating a method for processing an image according to an embodiment of the present disclosure. As shown in Fig. 1, the method for processing an image according to the embodiment of the present disclosure includes the following steps.

In step S10, a region to be blocked on the image is selected and a feature value of an object in the selected region is acquired.

Herein, a manner for selecting the region to be blocked includes an automatic selecting manner and a manual selecting manner. The specific process for selecting the region to be blocked will be explained in detail subsequently with reference to Figs. 2 and 3.

The acquiring the feature value of the object in the selected region may be carried out by performing mode recognition and classification on the whole image in a current video, and extracting a feature of an object in the selected region according to a mode recognition algorithm adopted when the mode recognition and classification are performed. It shall be noted that the embodiments of the present disclosure do not limit the adopted mode recognition algorithm.

In step S20, image processing is performed on the selected region when it is determined that a location of the selected region is not changed based on the feature value of the object.

Particularly, it is determined whether the acquired feature value of the object is the same as a feature value of an object in the selected region in a current image. If they are the same, it is determined that the location of the selected region is not changed; otherwise, it is determined that the location of the selected region is changed.

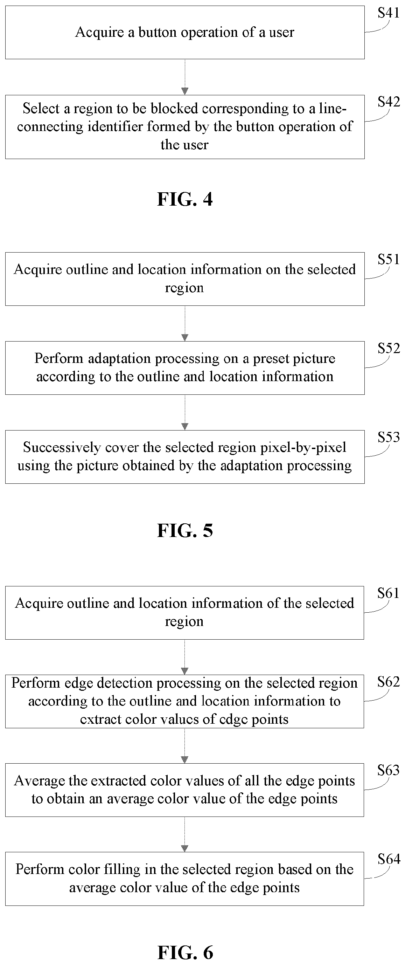

Herein, the manner for performing image processing on the selected region includes covering the selected region using a preset picture; or, performing color filling in the selected region based on an average color value of edge points. The specific process for performing image processing on the selected region will be explained in detail subsequently with reference to Figs. 4-6.

In an application example of a video call, before performing the method for processing an image according to an embodiment of the present disclosure, a blocking function of a terminal, which is processing a video call service, needs to be firstly turned on. In practical applications, the blocking function of the terminal, which is processing a video call service, may be triggered to be turned on by a trigger operation of a user. Specifically, an On-button or option may be generated, and when a trigger operation corresponding to the On-button or option is acquired, the blocking function of the terminal, which is processing the video call service, is turned on. In an embodiment, the trigger operation may be a click or touch operation or the like. In addition, in the embodiment of the present disclosure, the blocking function is set to be turned on in a default manner. For example, the blocking function of the terminal, which is processing the video call service, is turned on by default, while the user is starting a video call.

Furthermore, in the process for implementing the method for processing an image according to an embodiment of the present disclosure, the blocking function of the terminal, which is processing the video call service, may be triggered to be turned off at any time by a trigger operation of the user. Specifically, an Off-button or option may be generated, and when a trigger operation corresponding to the Off-button or option is acquired, the blocking function of the terminal, which is processing the video call service, is turned off timely. In this way, during the video call, the user may cancel the blocking effect of the selected region at any time to resume its original video.

Fig. 2 is a flow chart illustrating selection of a region to be blocked through an automatic selecting manner in a method for processing an image according to an embodiment of the present disclosure.

In the above embodiment, when the region to be blocked is selected through the automatic selecting manner, the process for selecting the region to be blocked includes the following steps.

In step S21, a touch operation of a user is acquired.

In step S22, mode recognition and classification are performed on the whole image to determine a feature value of an object touched by the user.

Herein, steps S21-S22 may be specifically implemented as follows. The user performs a touch operation on an object needing to be blocked through a touch interface of a terminal. When the touch operation of the user is acquired by the termianl, mode recognition and classification are performed on the whole image in a current video. Meanwhile, a feature of the object touched by the user is extracted according to a mode recognition algorithm adopted when the mode recognition and classification are performed, and a feature value of the object touched by the user is determined.

In step S23, a region to be blocked corresponding to the feature value of the object touched by the user is selected.

Specifically, after the region to be blocked is determined based on the feature value of the object touched by the user, the region to be blocked is selected.

Fig. 3 is a flow chart illustrating selection of a region to be blocked through a manual selecting manner in a method for processing an image according to an embodiment of the present disclosure.

In the above embodiment, when the region to be blocked is selected through the manual selecting manner, the process for selecting the region to be blocked includes the following steps.

In step S31, an operation for touching an interface by a user is acquired.

In step S32, a region to be blocked corresponding to a closed circle generated when the user touches the interface is selected.

Specifically, the user targets a region needing to be blocked with the closed circle of the touched interface on the terminal. When the terminal acquires the operation for touching the interface by the user, the region to be blocked corresponding to the closed circle of the interface touched by the user is selected. Rule and shape of the closed circle is not particularly limited, as long as the circle is closed.

Herein, it shall be noted that when the selection of the region to be blocked is implemented in steps S31 and S32, the terminal shall be a touch terminal.

After the selection of the region to be blocked is completed through the steps S31 and S32, mode recognition and classification are further perfromed on a whole image in a current video; extraction of a feature of an object in the selected region is performed according to a mode recognition algorithm adopted when the mode recognition and classification are performed, and a feature value of the object in the selected region is acquired.

Fig. 4 is a flow chart illustrating selection of a region to be blocked through a manual selecting manner in a method for processing an image according to another embodiment of the present disclosure.

In the above embodiment, when the region to be blocked is selected through the manual selecting manner, the process for selecting the region to be blocked may include the following steps.

In step S41, a button operation of a user is acquired.

In step S42, a region to be blocked which is determined by a line-connecting identifier formed by the button operation of the user is selected.

Specifically, a connecting line is formed by the touch operation of the user to identify the region to be blocked. When the terminal acquires the button operation of the user, the region to be blocked determined by the line-connecting identifier formed by the button operation of the user is selected.

Herein, it shall be noted that when the selection of the region to be blocked is implemented by steps S41 and S42, whether the terminal is touchable or not is not limited.

After the selection of the region to be blocked is completed through the steps S41 and S42, mode recognition and classification are further perfromed on a whole image in a current video; extraction of a feature of an object in the selected region is performed according to a mode recognition algorithm adopted when the mode recognition and classification are performed, and a feature value of the object in the selected region is acquired.

It shall be noted that after completing the process for selecting the region to be blocked in the flows as shown in Fig. 1 by any of the method flows shown in Figs. 2 to 4 for the first time, the user directly performs the operation of the following step S20; and after the user each time completes the process for selecting the region to be blocked in the flows shown in Fig. 1 through any of the method flows shown in Figs. 2 to 4 subsequently, it is required to be determined whether the feature value of the object is consistent with the feature value of the object in the selected region acquired in the previous step S10. If they are consistent, it indicates that the region to be blocked which is selected for this time has already been selected before this operation procedure, and then the procedure ends. If they are inconsistent, the subsequent operation procedures as shown in Fig. 1 continute to be performed.

Fig. 5 is a flow chart illustrating coverage of the selected region using a preset picture in a method for processing an image according to an embodiment of the present disclosure.

In the above embodiment, when image processing is performed on the selected region in a manner of covering the selected region by the preset picture, the performing image processing on the selected region includes the following steps.

In step S51, outline and location information on the selected region is acquired.

In step S52, adaptation processing is perfromed on the preset picture according to the outline and location information.

Herein, the performing the adaptation processing on the preset picture includes:
step A: aligning the selected region with the preset picture by taking their respective center points as reference;
step B: when an area of the preset picture is larger than that of the selected region, cropping the preset picture according to a size of the selected region; or, when the area of the preset picture is smaller than that of the selected region, performing amplification processing on the preset picture firstly, and then properly cropping the preset picture according to the size of the selected region.

In step S53, the selected region is successively covered pixel-by-pixel using the picture on which the adaptation processing is perfromed.

It shall be noted that, firstly, it is assumed that the number of the preset pictures is N, and the number of the selected regions is M. In this way, during the process for performing image processing on the selected region in such a manner that the selected region is covered using the preset picture, when M<N and step S52 is performed, adaptation processing between the M selected regions and the top M of the preset pictures selected by the user is successively performed; on the contrary, when M>N and the step S52 is performed, since the number of the preset pictures is insufficient, the preset pictures can be recycled in an order, and the adaptation processing between the preset picture and the selected region is completed.

Fig. 6 is a flow chart illustrating the performing of color filling in the selected region based on an average color value of edge points in a method for processing an image according to an embodiment of the present disclosure.

In the above embodiment, when image processing is performed on the selected region in a manner of performing color filling in the selected region based on an average color value of edge points, the performing the image processing on the selected region includes the following steps.

In step S61, outline and location information on the selected region is acquired.

In step S62, edge detection processing is performed on the selected region according to the outline and location information, to extract color values of edge points.

In step S63, the extracted color values of all the edge points are averaged to obtain an average color value of the edge points.

In step S64, color filling is performed in the selected region based on the average color value of the edge points.

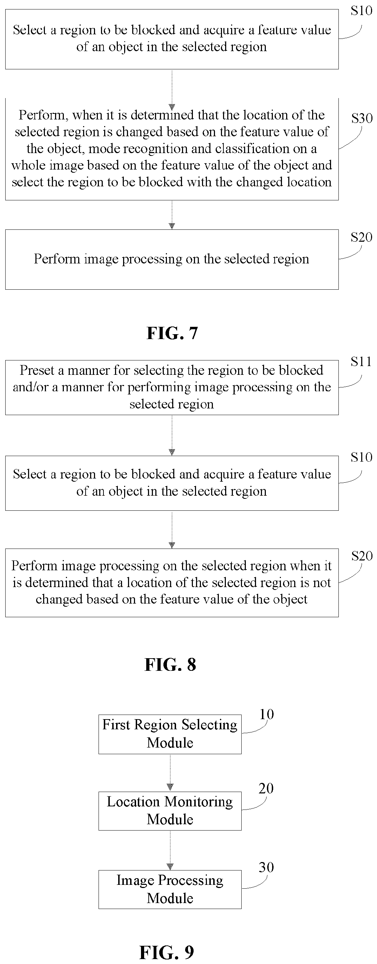

Fig. 7 is a flow chart illustrating a method for processing an image according to another embodiment of the present disclosure.

Based on the above-described embodiment, when it is determined that a location of a selected region has been changed based on a feature value of an object, the method further includes the following steps.

In step S30, mode recognition and classification are performed on a whole image based on the feature value of the object and the region to be blocked, whose location is changed, is located.

After the step S30 is completed, image processing on the selected region and transmitting of corresponding video stream after the image processing may continue to be performed.

Fig. 8 is a flow chart illustrating a method for processing an image according to yet another embodiment of the present disclosure.

Based on the above embodiment, before performing the step S10, the method further includes the following step.

In step S11, a manner for selecting a region to be blocked and/or a manner for performing image processing on the selected region are preset.

In the present embodiment, before selecting the region to be blocked, a user may preset an automatic selection manner or a manual selection manner as the manner for selecting the region to be blocked. Meanwhile, the user may preset a manner for covering the selected region by the preset picture, and/or a manner for performing color filling in the selected region based on an average color value of edge points as the manner for performing image processing on the selected region.

In practical applications, it shall be noted that if the manner for selecting the region to be blocked or the manner for performing image processing on the selected region is not preset before selecting the region to be blocked, in the specific operation procedure of the method for processing an image, the user may, in real time, set the manner for selecting the region to be blocked and the manner for performing image processing on the selected region.

If the manner for selecting the region to be blocked or the manner for performing image processing on the selected region is neither set in advance nor set in real time in the specific operation procedure by the user, both selecting the region to be blocked and subsequently performing image processing on the selected region may be implemented by default. However, for purpose of fastness and convenience of the operation, it is suggested that before selecting the region to be blocked, the user preset the manner for selecting the region to be blocked and the manner for performing image processing on the selected region. If neither of such manners is set in advance, a default manner is preferably employed in the specific operation procedure of the method for processing an image.

An embodiment of the present disclosure also provides a computer storage medium stored with computer-executable instructions for performing the method for processing an image, according to the embodiments of the present disclosure.

Fig. 9 is a block diagram illustrating a device for processing an image according to an embodiment of the present disclosure. As shown in Fig. 9, the device for processing an image according to the embodiment of the present disclosure includes a first region selecting module 10, a location monitoring module 20 and an image processing module 30.

The first region selecting module 10 is configured to select a region to be blocked and acquire a feature value of an object in the selected region.

Herein, the manner for selecting the region to be blocked by the first region selecting module 10 includes an automatic selecting manner and a manual selecting manner.

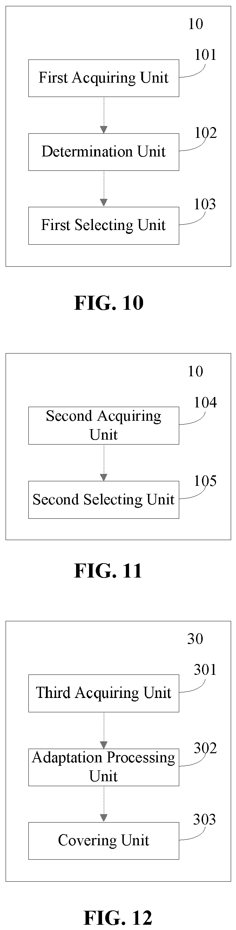

In an embodiment, as shown in Fig. 10, when the region to be blocked is selected through the automatic selecting manner, the first region selecting module 10 includes a first acquiring unit 101, a determination unit 102 and a first selecting unit 103.

The first acquiring unit 101 is configured to acquire a touch operation of a user.

The determination unit 102 is configured to perform mode recognition and classification on a whole image to determine a feature value of an object touched by the user.

The first selecting unit 103 is configured to select a region to be blocked corresponding to the feature value of the object touched by the user.

In an embodiment, as shown in Fig. 11, when the region to be blocked is selected through the manual selecting manner, the first region selecting module 10 includes a second acquiring unit 104 and a second selecting unit 105.

In an embodiment, the second acquiring unit 104 is configured to acquire an operation for touching an interface by a user; and
the second selecting unit 105 is configured to select a region to be blocked corresponding to a closed circle generated when the user touches the interface.

In another embodiment, the second acquiring unit 104 is configured to acquire a button operation of a user; and
the second selecting unit 105 is configured to select a region to be blocked which is determined by a line-connecting identifier formed by the button operation of the user.

The location monitoring module 20 is configured to determine whether a location of the selected region is changed based on the feature value of the object acquired by the first region acquiring module 10 and obtain a determination result.

Specifically, it is determined whether the acquired feature value of the object is the same as the feature value of the object in the selected region in a current image. If they are the same, it is determined that the location of the selected region is not changed. Otherwise, it is determined that the location of the selected region has been changed.

The image processing module 30 is configured to, when the determination result obtained by the location monitoring module 20 indicates that the location of the selected region is not changed, perform image processing on the selected region.

Herein, the manner used by the image processing module 30 to perform image processing on the selected region includes a manner for covering the selected region using a preset picture; or, a manner for performing color filling in the selected region based on an average color value of the edge points.

In an embodiment, as shown in Fig. 12, when the selected region is covered using the preset picture, the image processing module 30 includes a third acquiring unit 301, an adaptation processing unit 302 and a covering unit 303.

The third acquiring unit 301 is configured to acquire outline and location information of the selected region.

The adaptation processing unit 302 is configured to perform adaptation processing on a preset picture according to the outline and location information.

The covering unit 303 is configured to successively cover the selected region pixel-by-pixel using the picture on which the adaptation processing is performed.

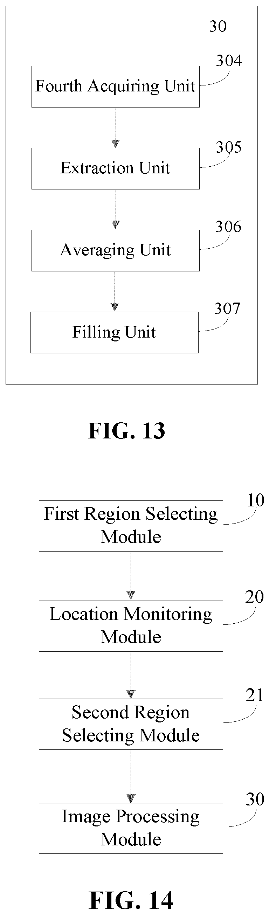

In an embodiment, as shown in Fig. 13, when color filling is perfromed in the selected region based on the average color value of the edge points, the image processing module 30 includes a fourth acquiring unit 304, an extraction unit 305, an averaging unit 306, and a filling unit 307.

The fourth acquiring unit 304 is configured to acquire outline and location information of the selected region.

The extraction unit 305 is configured to perform edge detection processing on the selected region according to the outline and location information, to extract color values of edge points.

The averaging unit 306 is configured to average the extracted color values of the edge points to obtain an average color value of the edge points.

The filling unit 307 is configured to perform color filling in the selected region based on the average color value of the edge points.

Fig. 14 is a block diagram illustrating a device for processing an image according to another embodiment of the present disclosure.

Based on the above-described embodiment, the device for processing an image further includes a second region selecting module 21.

The second region selecting module 21 is configured to, when the determination result obtained by the location monitoring module 20 indicates that the location of the selected region is changed, perform mode recognition and classification on a whole image based on the feature value of the object and select the region to be blocked whose location is changed.

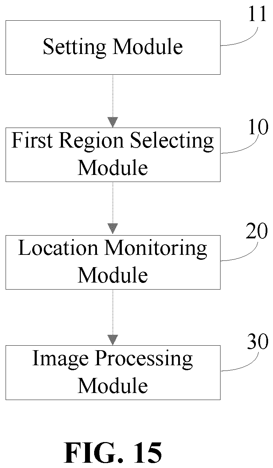

Fig. 15 is a block diagram of a device for processing an image according to still another embodiment of the present disclosure.

Based on the above embodiment, the device for processing an image further includes a setting module 11.

The setting module 11 is configured to, before the region to be blocked is selected by the first region selecting module 10, preset a manner for selecting the region to be blocked and/or a manner for performing image processing on the selected region.

Respective modules in the devices for processing an image and units included in the respective modules provided by the embodiments of the present disclosure may be implemented by a processor in the device for processing an image, or a specific logical circuit. For example, in practical applications, they may be implemented by central processing units (CPUs), digital signal processors (DSPs), and programmable gate arrays (FPGAs) in the device for processing an image.

The person skilled in the art should understand, the embodiments of the present disclosure may be provided as methods, systems, or computer program products. Thereby, the present disclosure may adopt forms of hardware embodiments, software embodiments, or embodiments combining the software and hardware aspects. Moreover, the present disclosure may adopt a form of computer program product implementing on one or more computer readable storage medium (which includes, but is not limited to a disk storage, an optical storage, and the like) containing computer readable program codes. The present disclosure is illustrated with reference to the flow chart and/or the block diagram of the method, device (system) and computer program product according to the embodiments of the present disclosure. It should be appreciated that each flow in the flow chart and/or each block in the block diagram and/or the combination of the flows in the flow chart and the blocks in the block diagram may be realized by computer program instructions. These computer program instructions may be provided to a general-purpose computer, a special purpose computer, an embedded processor or processors of other programmable data processing devices to generate a machine which makes the instructions executed by the processors of the computers or the processors of other programmable data processing devices generate a device for realizing the functions specified in one or more flows of the flow chart and/or one or more blocks in the block diagram.

These computer program instructions may also be stored in a computer-readable memory which is capable of guiding a computer or another programmable data processing device to work in a given manner, thereby enabling the instructions stored in the computer-readable memory to generate a product including an instruction device for realizing the functions specified in one or more flows of the flow chart and/or one or more blocks in the block diagram.

These computer program instructions may also be loaded to a computer or other programmable data processing devices to execute a series of operations thereon to generate the processing realized by the computer, so that the instructions executed by the computer or other programmable data devices offer the steps for realizing the functions specified in one or more flows of the flow chart and/or one or more blocks in the block diagram.

The above contents are implementations of embodiments of the present disclosure. It should be noted that for the person skilled in the art, it is possible to make several modifications and polishes without departing from the principle of the present disclosure, and these modifications and polishes also fall within the protection scope of the embodiments of the present disclosure.

### INDUSTRIAL APPLICABILITY

In the embodiments of the present disclosure, a region to be blocked is selected, and a feature value of an object in the selected region is acquired; image processing is performed on the selected region when it is determined that a location of the selected region is not changed based on the feature value of the object. In this way, user privacy can be effectively protected by performing suitable image processing on the selected region.

## Claims

1. A method for processing an image, comprising:
selecting a region to be blocked on the image, and acquiring a feature value of an object in the selected region; and
performing image processing on the selected region when it is determined that a location of the selected region is not changed based on the feature value of the object.

2. The method according to claim 1, wherein the selecting a region to be blocked comprises:
acquiring a touch operation of a user;
performing mode recognition and classification on the image to determine the feature value of the object touched by the user; and
selecting the region to be blocked corresponding to the feature value of the object touched by the user.

3. The method according to claim 1, wherein the selecting a region to be blocked comprises:
acquiring an operation for touching an interface from a user; and
selecting the region to be blocked corresponding to a closed circle generated when the user touches the interface;
or,
acquiring a button operation of a user; and
selecting the region to be blocked corresponding to a line-connecting identifier formed by the button operation of the user.

4. The method according to claim 1, wherein the performing image processing on the selected region comprises:
acquiring outline and location information of the selected region;
performing adaptation processing on a preset picture according to the outline and location information; and
successively covering the selected region pixel-by-pixel using the picture obtained by the adaptation processing.

5. The method according to claim 1, wherein the performing image processing on the selected region comprises:
acquiring outline and location information of the selected region;
performing edge detection processing on the selected region according to the outline and location information, to extract color values of edge points;
averaging the extracted color values of the edge points to obtain an average color value of the edge points; and
performing color filling in the selected region based on the average color value of the edge points.

6. The method according to any of claims 1-5, further comprising:
when it is determined that the location of the selected region is changed based on the feature value of the object, performing mode recognition and classification on the image based on the feature value of the object to locate the region to be blocked with the changed location.

7. The method according to any of claims 1-5, further comprising:
before the selecting a region to be blocked, presetting a manner for selecting the region to be blocked and/or a manner for performing image processing on the selected region.

8. A device for processing an image, comprising a first region selecting module, a location monitoring module and an image processing module, wherein
the first region selecting module is configured to select a region to be blocked on the image, and acquire a feature value of an object in the selected region;
the location monitoring module is configured to determine whether a location of the selected region is changed based on the feature value of the object to obtain a determination result; and
the image processing module is configured to, when the determination result obtained by the location monitoring module indicates that the location of the selected region is not changed, perform image processing on the selected region.

9. The device according to claim 8, wherein the first region selecting module comprises a first acquiring unit, a determination unit and a first selecting unit,
the first acquiring unit is configured to acquire a touch operation of a user;
the determination unit is configured to perform mode recognition and classification on the image to determine the feature value of the object touched by the user; and
the first selecting unit is configured to select the region to be blocked corresponding to the feature value of the object touched by the user.

10. The device according to claim 8, wherein the first region selecting module comprises a second acquiring unit and a second selecting unit;
the second acquiring unit is configured to acquire an operation for touching an interface from a user; and
the second selecting unit is configured to select the region to be blocked corresponding to a closed circle generated when the user touches the interface;
or,
the second acquiring unit is configured to acquire a button operation of a user; and
the second selecting unit is configured to select the region to be blocked corresponding to a line-connecting identifier formed by the button operation of the user.

11. The device according to claim 8, wherein the image processing module comprises a third acquiring unit, an adaptation processing unit and a covering unit,
the third acquiring unit is configured to acquire outline and location information of the selected region;
the adaptation processing unit is configured to perform adaptation processing on a preset picture according to the outline and location information; and
the covering unit is configured to successively cover the selected region pixel-by-pixel using the picture obtained by the adaptation processing.

12. The device according to claim 8, wherein the image processing module comprises a fourth acquiring unit, an extraction unit, an averaging unit and a filling unit,
the fourth acquiring unit is configured to acquire outline and location information of the selected region;
the extraction unit is configured to perform edge detection processing on the selected region according to the outline and location information, to extract color values of edge points;
the averaging unit is configured to average the extracted color values of the edge points to obtain an average color value of the edge points; and
the filling unit is configured to perform color filling in the selected region based on the average color value of the edge points.

13. The device according to any of claims 8-12, further comprising a second region selecting module,
the second region selecting module is configured to, when the determination result obtained by the location monitoring module indicates that the location of the selected region is changed, perform mode recognition and classification on the image based on the feature value of the object to locate the region to be blocked with the changed location.

14. The device according to any of claims 8-12, further comprising a setting module,
the setting module is configured to, before the region to be blocked is selected by the first region selecting module, preset a manner for selecting the region to be blocked and/or a manner for performing image processing on the selected region.

15. A computer storage medium stored with computer executable instructions for performing the method for processing an image according to any of claims 1-7.
